(19) 

Europäisches
Patentamt
European
Patent Office
Office européen
des brevets

(11) **EP 4 250 399 A1**

(12) **EUROPEAN PATENT APPLICATION**
published in accordance with Art. 153(4) EPC

(43) Date of publication:
**27.09.2023 Bulletin 2023/39**

(21) Application number: **22856215.3**

(22) Date of filing: **10.08.2022**

(51) International Patent Classification (IPC):
**H01M 4/48** *(2010.01)*    **H01M 4/58** *(2010.01)*
**H01M 4/36** *(2006.01)*    **H01M 4/62** *(2006.01)*
**H01M 4/587** *(2010.01)*    **H01M 10/052** *(2010.01)*
**H01M 4/02** *(2006.01)*

(52) Cooperative Patent Classification (CPC):
**H01M 4/02; H01M 4/131; H01M 4/36; H01M 4/48;**
**H01M 4/58; H01M 4/587; H01M 4/62;**
**H01M 10/052; H01M 10/0525;** Y02E 60/10

(86) International application number:
**PCT/KR2022/011917**

(87) International publication number:
**WO 2023/018218 (16.02.2023 Gazette 2023/07)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **13.08.2021  KR 20210107172**

(71) Applicant: **LG Energy Solution, Ltd.**
**Seoul 07335 (KR)**

(72) Inventors:
• **PARK, Semi**
**Daejeon 34122 (KR)**

• **SHIN, Sun Young**
**Daejeon 34122 (KR)**
• **LEE, Yong Ju**
**Daejeon 34122 (KR)**
• **PARK, Heeyeon**
**Daejeon 34122 (KR)**
• **OH, Ilgeun**
**Daejeon 34122 (KR)**
• **CHOI, Junghyun**
**Daejeon 34122 (KR)**

(74) Representative: **Hoffmann Eitle**
**Patent- und Rechtsanwälte PartmbB**
**Arabellastraße 30**
**81925 München (DE)**

(54) **ANODE ACTIVE MATERIAL, ANODE SLURRY, ANODE, AND SECONDARY BATTERY**

(57)    The present invention relates to a negative electrode active material including silicon-based oxide particles, in which at least a portion of the silicon-based oxide particles include Mg and Li, and when a content of Mg and a content of Li within 50% of the radius in the surface direction from the particle center are defined as C (Mg) and C (Li), respectively, and a content of Mg and a content of Li within 50% of the radius in the center direction from the particle surface are defined as S (Mg) and S (Li), respectively, the contents satisfy the following Equation (1) and the following Equation (2), a negative electrode slurry and a negative electrode which include the same, and a secondary battery including the negative electrode.

EP 4 250 399 A1

**Description**

[Technical Field]

This application claims priority to and the benefit of Korean Patent Application No. 10-2021-0107172 filed in the Korean Intellectual Property Office on August 13, 2021, the entire contents of which are incorporated herein by reference.

The present invention relates to a negative electrode active material, a negative electrode slurry and a negative electrode, which include the negative electrode active material, and a secondary battery including the negative electrode.

[Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more. Recently, the demand for secondary batteries as an energy source has been rapidly increasing as the technical development and the demand for portable devices such as portable computers, portable telephones, and cameras increase. Among such secondary batteries, lithium secondary batteries having a high energy density, that is, high capacity have been extensively studied, commercialized and widely used.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-based particle having high discharge capacity may be used. However, as the need for the performance of lithium secondary batteries is steadily increasing, there is a need for continuous improvement in battery materials including negative electrode active materials.

[Detailed Description of the Invention]

[Technical Problem]

The present invention has been made in an effort to provide a negative electrode active material capable of providing a battery with improved swelling and/or service life characteristics, a negative electrode slurry and a negative electrode, which include the same, and a secondary battery.

[Technical Solution]

An exemplary embodiment of the present invention provides a negative electrode active material including silicon-based oxide particles, in which at least a portion of the silicon-based oxide particles include Mg and Li, and when a content of Mg and a content of Li within 50% of the radius in the surface direction from the particle center are defined as C (Mg) and C (Li), respectively, and a content of Mg and a content of Li within 50% of the radius in the center direction from the particle surface are defined as S (Mg) and S (Li), respectively, the contents satisfy the following Equation (1) and the following Equation (2):

$$\text{Equation (1)} \quad 0.8 \leq S(Mg) / C(Mg) \leq 1.2$$

$$\text{Equation (2)} \quad 1 < S(Li) / C(Li)$$

Another exemplary embodiment of the present invention provides a negative electrode slurry including the negative electrode active material.

Still another exemplary embodiment of the present invention provides a negative electrode including the negative electrode active material.

Yet another exemplary embodiment of the present invention provides a secondary battery including the negative electrode.

[Advantageous Effects]

Negative electrode active materials according to exemplary embodiments of the present invention include silicon-based oxide particles containing both Mg and Li, and thus can be used as high-efficiency materials. Further, since Mg and Li have specific distributions within the particles, each disadvantage of Mg and Li can be minimized.

Specifically, due to the specific distribution, the presence of Mg not only can increase the initial efficiency of a battery, but can also minimize a decrease in discharge capacity despite the presence of Mg and minimize a decrease in viscosity of the negative electrode slurry due to the presence of Li.

The negative electrode active material according to some exemplary embodiments of the present invention can improve swelling characteristics and/or service life characteristics.

[Best Mode]

Hereinafter, the present invention will be described in more detail in order to help the understanding of the present invention.

The terms or words used in the present specification and the claims should not be construed as being limited to typical or dictionary meanings, and should be construed as meanings and concepts conforming to the technical spirit of the present invention on the basis of the principle that an inventor can appropriately define concepts of the terms in order to describe his or her own invention in the best way.

The terms used in the present specification are used only to describe exemplary embodiments, and are not intended to limit the present invention. Singular expressions include plural expressions unless the context clearly indicates otherwise.

In the present invention, the term "comprise", "include", or "have" is intended to indicate the presence of the characteristic, number, step, constituent element, or any combination thereof implemented, and should be understood to mean that the presence or addition possibility of one or more other characteristics or numbers, steps, constituent elements, or any combination thereof is not precluded.

In the present specification, an average particle diameter ($D_{50}$) may be defined as a particle diameter corresponding to 50% of a cumulative volume in a particle diameter distribution curve of the particles. The average particle diameter ($D_{50}$) may be measured using, for example, a laser diffraction method. The laser diffraction method can generally measure a particle diameter of about several mm from the submicron region, and results with high reproducibility and high resolution may be obtained.

In the present specification, the specific surface area of the silicon-based oxide particle may be measured by a Brunauer-Emmett-Teller (BET) method. For example, the specific surface area of the silicon-based oxide particle may be measured by a BET six-point method by a nitrogen gas adsorption distribution method using a porosimetry analyzer (Bell Japan Inc, Belsorp-II mini).

In the present specification, the content of Mg or Li inside, outside or throughout the silicon-based oxide particles may be confirmed through ICP analysis. For the ICP analysis, after a predetermined amount (about 0.01 g) of the silicon-based oxide particles are exactly aliquoted, the silicon-based oxide particles are completely decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid prepared using a standard solution (5 mg/kg) in an intrinsic wavelength of the Mg or Li element using an inductively coupled plasma atomic emission spectrometer (ICPAES, Perkin-Elmer 7300). Thereafter, a pre-treated sample solution and a blank sample are each introduced into the apparatus, an actual intensity is calculated by measuring each intensity, the concentration of each component relative to the prepared calibration curve is calculated, and then the concentration of the Mg or Li in the particles may be analyzed by converting the total sum so as to be the theoretical value. The content of Mg or Li (T (Mg), T (Li)) in throughout the particles may be calculated through the analyzed concentration of Mg or Li. In addition, until the particle diameter becomes 50%, for example, until the diameter becomes 3 um when the particle diameter is 6 $\mu$m, silicon-based oxide particles are decomposed on a hot plate, and then the decomposed product is extracted to analyze the content of Mg or Li (S (Mg), S (Li)) within 50% of the radius in the center direction from the particle surface, and the remaining residue may be completely decomposed on a hot plate to analyze the content of Mg or Li (C (Mg), C (Li)) within 50% of the radius in the surface direction from the particle center. The content of Mg may be analyzed as described above through ICP analysis, but may also be measured using SEM EDAX analysis.

<Negative electrode active material>

The negative electrode active material according to an exemplary embodiment of the present invention includes silicon-based oxide particles, in which in at least a portion of the silicon-based oxide particles, when a content of Mg and a content of Li within 50% of the radius in the surface direction from the particle center are defined as C (Mg) and C (Li), respectively, and a content of Mg and a content of Li within 50% of the radius in the center direction from the particle surface are defined as S (Mg) and S (Li), respectively, the contents satisfy the following Equation (1) and the following Equation (2):

$$\text{Equation (1)} \quad 0.8 \leq S(Mg) / C(Mg) \leq 1.2$$

$$\text{Equation (2)} \quad 1 < S(Li) / C(Li)$$

According to an exemplary embodiment, the S (Mg) / C (Mg) of Equation (1) may be 0.9 to 1.1, and may be 0.95 to 1.05. According to an example, the S (Mg) / C (Mg) of Equation (1) may be 0.95 to 1.

According to an exemplary embodiment, the S (Li) / C (Li) of Equation (2) may be 1.2 or more, 1.5 or more, 1.8 or more, 2 or more, 3 or more, 4 or more, or 4.5 or more. The upper limit of the S (Li) / C (Li) of Equation (2) is not particularly limited, but may be, for example, 50 or less, 10 or less, or 5 or less.

In the exemplary embodiment, the content of Mg or Li is a content which expresses the content of Mg or Li as a percentage based on 100 wt% of the particles. For example, the content of Mg or Li within 50% of the radius in the surface direction from the particle center means the percentage value of the content of Mg or Li when the weight up to 50% of the radius in the surface direction from the particle center is defined as 100 wt%. Likewise, the content of Mg or Li within 50% of the radius in the center direction from the particle surface means the percentage value of the content of Mg or Li when the weight up to 50% of the radius in the center direction from the particle surface is defined as 100 wt%.

The negative electrode active material according to the exemplary embodiment includes silicon-based oxide particles including both Mg and Li, and Mg is uniformly distributed throughout the silicon-based oxide particles, whereas Li is present in a higher content in the surface portion of the particles than in the center portion of the particles. Since the negative electrode active material includes both Mg and Li, the efficiency is improved compared to silicon-based oxide particles that include none of Mg and Li. However, although the initial efficiency of the battery may be increased by the presence of Mg, the discharge capacity may be slightly decreased. However, since the exemplary embodiment of the present invention further includes Li in addition to Mg and Li is a lighter material than Mg, the decrease in discharge capacity depending on the increase in Li content is small. Furthermore, when the content of Li is increased, there is a problem in that the viscosity of a slurry for manufacturing a negative electrode is lowered, the Li present on the surface portion of the particles may have a greater effect on the decrease in the viscosity of the slurry, but in the exemplary embodiment, the content of Li may be reduced using both Mg and Li compared to using Li alone, and accordingly, the decrease in slurry viscosity may be minimized. Further, a compound phase including Mg and a compound phase including Li may improve the swelling characteristics of the particles, and accordingly, there is an advantage in that the service life performance of a battery is improved.

According to an exemplary embodiment, as a negative electrode active material including silicon-based oxide particles, 80% or more, preferably 90% or more, and more preferably 100% of the silicon-based oxide particles include Mg and Li, and satisfy Equation (1) and Equation (2) .

According to another exemplary embodiment of the present invention, the Mg content S (Mg) on the surface of each particle relative to the Mg content T (Mg) throughout each particle may be 0.8 to 1, 0.9 to 1, or 0.95 to 1.

According to still another exemplary embodiment of the present invention, the Li content S (Li) on the surface of each particle relative to the Li content T (Li) throughout each particle may be 1 to 1.2, 1 to 1.15, or 1 to 1.1.

According to yet another exemplary embodiment of the present invention, Mg throughout each particle may be included in a Mg content T (Mg) of 0.01 wt% to 15 wt%, specifically 0.1 wt% to 13 wt%, and more specifically 3 wt% to 13 wt%, based on total 100 wt% of the entire particles.

According to yet another exemplary embodiment of the present invention, Li throughout each particle may be included in a Li content T (Li) of 0.01 wt% to 15 wt%, specifically 0.1 wt% to 13 wt%, and more specifically 3 wt% to 13 wt%, based on total 100 wt% of the entire particles.

In the exemplary embodiment, the content of Mg or Li is a content which expresses the content of Mg or Li as a percentage based on 100 wt% of the particles. For example, the content of Mg or Li throughout each particle means the percentage value of the content of Mg or Li based on total 100 wt% of the entire particles.

According to yet another exemplary embodiment of the present invention, the Li content S (Li) on the surface of each particle may be 0.1 wt% to 20 wt%, when the content on the particle surface, that is, up to 50% of the radius in the center direction from the particle surface is defined as 100 wt% Specifically, the Li on the surface of each particle may be included in a Li content S (Li) of 0.1 wt% to 15 wt%, 0.1 wt% to 13 wt%, 0.1 wt% to 10 wt, and more specifically 1.5 wt% to 8 wt% when the content on the particle surface, that is up to 50% of the radius in the center direction from the particle surface is defined as 100 wt%.

According to yet another exemplary embodiment of the present invention, the silicon-based oxide particles may further include at least one of a carbon layer provided on the surface; and a phosphate layer including at least one of aluminum phosphate and lithium phosphate. In this case, the S (Mg) and S (Li) are measured on the surface of silicon-based oxide particles having a carbon layer and/or a phosphate layer. The carbon layer and/or the phosphate layer may cover the entire surface of the silicon-based oxide particles, but may cover only a portion of the surface. Conductivity is imparted to the silicon-based oxide particles by the carbon layer and/or the phosphate layer, and the volume change of a negative electrode active material including the silicon-based oxide particles is effectively suppressed, so that the service life characteristics of the battery may be further improved.

In an exemplary embodiment of the present specification, the carbon layer may include at least any one of amorphous carbon and crystalline carbon. The carbon layer may have one layer, and may have a laminated structure of two or more layers.

The crystalline carbon may further improve the conductivity of the silicon-containing composite particles. The crystalline carbon may include at least one selected from the group consisting of fullerene, carbon nanotube and graphene.

The amorphous carbon may suppress the expansion of the silicon-containing composite particles by appropriately maintaining the strength of the carbon layer. The amorphous carbon may be a carbon-based material formed using at least any one carbide selected from the group consisting of tar, pitch and other organic materials, or a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The hydrocarbon may be a substituted or unsubstituted aliphatic or alicyclic hydrocarbon, or a substituted or unsubstituted aromatic hydrocarbon. The aliphatic or alicyclic hydrocarbon may be methane, ethane, ethylene, acetylene, propane, butane, butene, pentane, isobutane, hexane, or the like. Examples of the aromatic hydrocarbon of the substituted or unsubstituted aromatic hydrocarbon include benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment, the carbon layer may be included in an amount of 0.1 wt% to 20 wt%, specifically 1 wt% to 10 wt%, and more specifically 2 wt% to 7 wt%, based on total 100 wt% of the silicon-based oxide particles. When the above range is satisfied, the conductivity of the negative electrode active material is improved, and the volume change of the negative electrode active material during the charging and discharging of a battery is readily suppressed, so that the service life characteristics of the battery may be improved.

In an exemplary embodiment, the carbon layer may have a thickness of 1 nm to 500 nm, specifically 5 nm to 300 nm. When the above range is satisfied, the volume change of the negative electrode active material is readily suppressed and side reactions between an electrolytic solution and the negative electrode active material are suppressed, so that the service life characteristics of a battery may be improved.

According to another exemplary embodiment of the present invention, the phosphate layer including at least one of aluminum phosphate and lithium phosphate provided on the surface of the silicon-based oxide particles may be an aluminum phosphate layer, a lithium phosphate layer or an aluminum lithium phosphate layer.

For example, by using a method of performing a coating treatment by dry-mixing the above-described silicon-based oxide particles and phosphate and heat-treating the resulting mixture; a method of performing a coating treatment by mixing phosphate, the above-described silicon-based oxide particles and phosphate with a solvent, and then reacting the resulting mixture while evaporating the solvent; a method of performing a coating treatment by dry-mixing an aluminum or lithium precursor, for example, an aluminum oxide or lithium oxide with a phosphorus precursor, for example, a phosphorus oxide and heat-treating the resulting mixture; or a method of performing a coating treatment by mixing an aluminum or lithium precursor, for example, an aluminum oxide or lithium oxide with a phosphorus precursor, for example, a phosphorous oxide with a solvent, and then reacting the resulting mixture while evaporating the solvent, a phosphate layer may be formed.

For example, it is possible to use a method of performing a coating treatment by dry-mixing the above-described silicon-based oxide particles with $Al_yP_zO_w$ (an aluminum phosphate-series) and heat-treating the resulting mixture, a method of performing a coating treatment by mixing $Al_yP_zO_w$ and silicon-based oxide particles with a solvent, and then reacting the resulting mixture while evaporating the solvent, a method of performing a coating treatment by dry-mixing $Al_xO_y$ (an aluminum precursor) and $P_zO_w$ (a P precursor) and heat-treating the resulting mixture, and a method of performing a coating treatment by mixing $Al_xO_y$ (an aluminum precursor) and $P_zO_w$ (a P precursor) with a solvent, and then reacting the resulting mixture while evaporating the solvent.

As another example, it is possible to use a method of performing a coating treatment by dry-mixing the above-described silicon-based oxide particles with $Li_xAl_yP_zO_w$ (a Li-Al-P-O series) and heat-treating the resulting mixture and a method of performing a coating treatment by mixing $Li_xAl_yP_zO_w$ and silicon-based oxide particles with a solvent, and then reacting the resulting mixture while evaporating the solvent.

Here, x, y, z and w may be $0<x\leq10$, $0<y\leq10$, $0<z\leq10$, and $0<w\leq10$, and mean the number ratio of each atom.

According to an exemplary embodiment of the present invention, x may be $0<x\leq3$.

According to an exemplary embodiment of the present invention, y may be $0 < y \leq 1$.

According to an exemplary embodiment of the present invention, z may be $0.5 \leq z \leq 3$.

According to an exemplary embodiment of the present invention, w may be $4 < w \leq 12$.

As an example, $AlPO_4$ and $Al(PO_3)_3$ may be used as a surface treatment material for forming a phosphate layer, and a material produced on the particle surface may be $Li_3PO_4$ or $AlPO_4$.

Al in the phosphate layer may be included in an amount of 0.01 wt% to 0.5 wt% based on total 100 wt% of the silicon-based oxide particles, and P may be included in an amount of 0.01 wt% to 1.5 wt% based on total 100 wt% of the silicon-based oxide particles. When the above range is satisfied, there is an advantage in that slurry processability is improved by suppressing the reaction between the above-described silicon-based oxide particles and water in the water-based mixing process.

According to another exemplary embodiment of the present invention, the Mg may be present as a Mg compound phase. The Mg compound phase may include at least any one selected from the group consisting of, for example, Mg silicates, Mg silicides and Mg oxides. The Mg silicate may include at least any one of $Mg_2SiO_4$ and $MgSiO_3$. The Mg silicide may include $Mg_2Si$. The Mg oxide may include $MgO$.

In preferred exemplary embodiments, the Mg compound phase includes $Mg_2SiO_4$ and $MgSiO_3$. Preferably, the sum of the contents of $Mg_2SiO_4$ and $MgSiO_3$ is greater than the total sum of the rest of the Mg compound phase, and is preferably 70 wt% or more in the entire Mg compound phase.

According to still another exemplary embodiment of the present invention, the Li may be present as a Li compound phase. The Li compound phase may include at least one of, for example, Li silicates, Li silicides and Li oxides. The Li compound phase may include one or more selected from the group consisting of, for example, $Li_2SiO_3$, $Li_2Si_2O_5$, $Li_3SiO_3$, and $Li_4SiO_4$.

In preferred exemplary embodiments, the Li compound phase includes $Li_2SiO_3$ and $Li_2Si_2O_5$. Preferably, the sum of the contents of $Li_2SiO_3$ and $Li_2Si_2O_5$ is greater than the total sum of the rest of the Li compound phase, and is preferably 70 wt% or more in the entire Li compound phase.

According to yet another exemplary embodiment of the present invention, the silicon-based oxide particles may have an average particle diameter ($D_{50}$) of 1 um to 30 um. The silicon-based oxide particles may have an average particle diameter ($D_{50}$) of specifically 3 um to 20 $\mu$m, and more specifically 5 um to 10 um. When the above range is satisfied, side reactions between the negative electrode active material and an electrolytic solution may be controlled, and the discharge capacity and initial efficiency of the battery may be effectively implemented.

According to yet another exemplary embodiment of the present invention, the silicon-based oxide particles may have a BET specific surface area of 0.5 $m^2/g$ to 60 $m^2/g$. The silicon-based oxide particles may have a BET specific surface area of specifically 1 $m^2/g$ to 40 $m^2/g$, and more specifically 5 $m^2/g$ to 30 $m^2/g$. When the above range is satisfied, side reactions between an electrolytic solution and the negative electrode active material during the charging and discharging of a battery may be reduced, so that the service life characteristics of the battery may be improved.

According to yet another exemplary embodiment of the present invention, the silicon-based oxide particles may further include Si crystal grains. The Si crystal grains may have a particle diameter of 1 nm to 20 nm.

According to yet another exemplary embodiment of the present invention, the silicon-based oxide particles may further include SiO $SiO_x$ ($0 < x < 2$). The above-described Mg compound phase and Li compound phase may be present inside and/or on the surface of $SiO_x$ ($0 < x < 2$).

### <Method for preparing negative electrode active material>

The negative electrode active material according to the above-described exemplary embodiment may be prepared by a method including preparing silicon-based oxide particles including Mg (S1); and distributing Li in the silicon-based oxide particles including Mg (S2).

First, the preparing of the silicon-based oxide particles including Mg (S1) may use an in-situ doping method. In one example, in the preparing of the silicon-based oxide particles including Mg (S1), the silicon-based oxide particles may be formed through forming a mixed gas by vaporizing a powder in which a Si powder and a $SiO_2$ powder are mixed and Mg, respectively, and then mixing the vaporized powder and Mg, and heat-treating the mixed gas in a vacuum state at 800°C to 950°C. As another example, in the preparing of the silicon-based oxide particles including Mg, the silicon-based oxide particles may be formed through forming a mixed gas by mixing a Si powder, a $SiO_2$ powder and Mg while or after vaporizing each of them, or mixing the Si powder, the $SiO_2$ powder and the Mg, and then vaporizing the resulting mixture; and heat-treating the mixed gas in a vacuum state at 800°C to 950°C.

The mixed powder of the Si powder and the $SiO_2$ powder may be vaporized by performing the heat treatment at 1,000°C to 1,800°C or 1,200°C to 1,500°C, and the Mg powder may be vaporized by performing the heat treatment at 500°C to 1,200°C or 600°C to 800°C. By allowing the materials to react in a gas state as described above, Mg may be uniformly distributed in the silicon-based oxide particles. In the silicon-based oxide particles, the Mg compound phase may include the above-described Mg silicates, Mg silicides, Mg oxides, and the like.

The particle diameter of the silicon-based oxide particles including Mg produced by the method described above may be adjusted by a pulverization method such as a mechanical milling method, if necessary.

Subsequently, the distributing of Li in the silicon-based oxide particles including Mg (S2) may be performed by an ex-situ doping method. By using such a method, the concentration of Li inside or on the surface of the particles may be adjusted as described above. For example, the distributing of Li in the silicon-based oxide particles including Mg (S2) may include forming a carbon layer on the surface of silicon-based oxide particles including Mg (S21), and distributing Li in the silicon-based oxide particles including Mg, on which the carbon layer is formed (S22).

The forming of the carbon layer on the surface of the silicon-based oxide particles including Mg (S21) may be performed by a method of injecting a carbon-based raw material gas such as methane gas and performing a heat treatment in a rotary tubular furnace. Specifically, a carbon layer may be formed by introducing the silicon-based oxide particles into a rotary tubular furnace, increasing the temperature to 800°C to 1,150°C, or 900°C to 1,050°C, or 950°C to 1,000°C at a rate of 3 to 10°C/min or about 5°C/min, flowing an argon gas and a carbon-based material raw material gas while rotating the rotary tubular furnace, and performing a heat treatment for 30 minutes to 8 hours.

The distributing of Li in the silicon-based oxide particles including Mg, on which the carbon layer is formed (S22) may be performed by mixing the silicon-based oxide particles including Mg, on which the carbon layer is formed with a lithium metal powder or a lithium precursor, for example, LiOH or $Li_2O$, and heat-treating the resulting mixture at 400°C to 1200°C, for example, 500°C to 1000°C, if necessary. The content of Li in the particles may be adjusted by adjusting the lithium vapor velocity. For example, the relative amount of Li on the particle surface may be increased by increasing the lithium vapor velocity. For example, the lithium vapor velocity may be affected by the temperature conditions or change rate in temperature during the introduction of Li. Specifically, the introduction of Li may be performed under a condition that the temperature is increased from a low temperature to a high temperature in at least some intervals of a temperature range of 500°C to 1000°C, for example, 600°C to 900°C. Additionally, the temperature may be increased at a rate of less than 7°C/min, for example, 1°C/min or more to 6°C/min, specifically, 3°C/min to 6°C/min, and for example, 4.5°C/min to 5.5°C/min.

Alternatively, Step (S22) may be performed using an electrochemical method.

**<Negative electrode and negative electrode slurry>**

The negative electrode according to another exemplary embodiment of the present invention may include a negative electrode active material, and here, the negative electrode active material is the same as the negative electrode active material in the above-described exemplary embodiments. Specifically, the negative electrode may include a negative electrode current collector and a negative electrode active material layer disposed on the negative electrode current collector. The negative electrode active material layer may include the negative electrode active material. Furthermore, the negative electrode active material layer may further include a binder and/or a conductive material.

The negative electrode slurry according to another exemplary embodiment of the present invention may include a negative electrode active material, and here, the negative electrode active material is the same as the negative electrode active material in the above-described exemplary embodiments. Specifically, the negative electrode slurry includes the material of the negative electrode active material layer, and may further include a solvent for processability. As the solvent, a solvent may be used by being selected from those known in the art, and for example, water may be used. The negative electrode slurry may vary depending on the composition and/or mixing method, but in the present invention, the active material particles may include both Mg and Li as described above, thereby minimizing a decrease in viscosity of the slurry.

The negative electrode current collector is sufficient as long as the negative electrode current collector has conductivity without causing a chemical change to the battery, and is not particularly limited. For example, as the current collector, it is possible to use copper, stainless steel, aluminum, nickel, titanium, fired carbon, or a material in which aluminum or stainless steel whose surface is treated with carbon, nickel, titanium, silver, and the like. Specifically, a transition metal, such as copper or nickel which adsorbs carbon well, may be used as a current collector. Although the current collector may have a thickness of 6 um to 20 $\mu$m, the thickness of the current collector is not limited thereto.

The binder may include at least one selected from the group consisting of a polyvinylidene fluoridehexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The conductive material is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a metal powder such as a carbon fluoride powder, an aluminum powder, and a nickel powder; a conductive whisker such as zinc oxide and potassium titanate; a conductive metal oxide such as titanium oxide; a conductive material such as polyphenylene derivatives, and the like.

## <Secondary battery>

The secondary battery according to still another exemplary embodiment of the present invention may include the negative electrode in the above-described exemplary embodiment. Specifically, the secondary battery may include a negative electrode, a positive electrode, a separator interposed between the positive electrode and the negative electrode, and an electrolyte, and the description on the above-described negative electrode may be applied to the negative electrode.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Further, the positive electrode current collector may typically have a thickness of 3 um to 500 um, and the adhesion of the positive electrode active material may also be enhanced by forming fine convex and concave irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$) ; a vanadium oxide such as $LiV_3O_8$, $V_2O_5$, and $Cu_2V_2O_7$; a Ni site type lithium nickel oxide expressed as chemical formula $LiNi_{1-c2}Mc_2O_2$ (here, M is at least one selected from the group consisting of Co, Mn, Al, Cu, Fe, Mg, B and Ga, and c2 satisfies $0.01 \leq c2 \leq 0.3$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.1$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change in a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoridehexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such a cyclic carbonate may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

According to still another exemplary embodiment of the present invention, provided are a battery module including the secondary battery as a unit cell, and a battery pack including the same. The battery module and battery pack include the secondary battery having high capacity, high rate-limiting characteristics, and high cycle characteristics. The secondary battery may be used as a power source for a medium- or large-sized device selected from the group consisting of an electric vehicle, a hybrid electric vehicle, a plug-in hybrid electric vehicle, and a power storage system.

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

**<Examples>**

**Example 1**

(1) Preparation of preliminary silicon-based oxide particles **(Mg doping and carbon layer formation)**

By heat-treating 200 g of a powder obtained by uniformly mixing a Si powder and a silicon oxide ($SiO_2$) powder at a molar ratio of 1:1 and 14 g of Mg at 1400°C and 700°C, respectively in a reduced pressure atmosphere, silicon oxide vapor by the Si and the silicon oxide and magnesium vapor were simultaneously generated and allowed to react in the gas phase. After a reacted composite was cooled and precipitated, the composite was pulverized with a jet mill to collect particles having an average particle diameter ($D_{50}$) of about 6 um.

The collected particles were put into a tubular furnace in the form of a tube and subjected to chemical vapor deposition (CVD) treatment under a mixed gas of argon (Ar) and methane ($CH_4$) to prepare preliminary silicon-based oxide particles on which a carbon coating layer is formed.

(2) Preparation of silicon-based oxide particles **(Li doping)**

The preliminary silicon-based oxide particle powder prepared above and a Li metal powder were heated at a rate of 5°C/min from a temperature of 600°C to 800°C in an inert atmosphere to increase the lithium vapor velocity, thereby increasing the relative amount of Li on the surface of the preliminary silicon-based oxide particles. Through this, silicon-based oxide particles having a high Li content on the surface of the silicon-based oxide particles were prepared.

(3) Preparation of negative electrode active material **(formation of surface coating layer of silicon-based oxide particles)**

After the prepared silicon-based oxide particles including Li and Al(PO$_3$)$_3$ were mixed, a heat treatment was performed at a temperature of 600°C to form a surface coating layer composed of AlPO$_4$ and Li$_3$PO$_4$ on the surface of the silicon-based oxide particles including Li.

As a result of ICP analysis, the contents of Al and P of the prepared negative electrode active material were 0.15 wt% and 0.5 wt%, respectively, based on 100 wt% of the silicon-based oxide particles.

As a result of ICP analysis, the contents of C (Mg), S (Mg), and T (Mg) of the produced negative electrode active material were 6.1 wt%, 5.9 wt%, and 6 wt%, respectively, based on 100 wt% of silicon-based oxide particles, and the contents of C(Li), S(Li), and T(Li) were 0.5 wt%, 2.2 wt%, and 2 wt%, respectively, based on 100 wt% of silicon-based oxide particles.

**Example 2**

A negative electrode active material was prepared in the same manner as in Example 1, except that the doping temperature of Li during the preparation of the silicon-based oxide particles was increased at a rate of 2°C/min from a temperature of 720°C to 800°C.

**Example 3**

A negative electrode active material was prepared in the same manner as in Example 1, except that the doping temperature of Li during the preparation of the silicon-based oxide particles was increased at a rate of 5°C/min from a temperature of 600°C to 900°C.

**Example 4**

A negative electrode active material was prepared in the same manner as in Example 1, except that the doping temperature of Li during the preparation of the silicon-based oxide particles was increased at a rate of 2°C/min from a temperature of 780°C to 900°C.

**Example 5**

A negative electrode active material was prepared in the same manner as in Example 1, except that 200 g of the powder obtained by mixing the Si powder and the silicon oxide (SiO$_2$) powder and 18 g of Mg during the preparation of the preliminary silicon-based oxide particles were each heat-treated in a reduced pressure atmosphere.

**Example 6**

A negative electrode active material was prepared in the same manner as in Example 5, except that the doping temperature of Li during the preparation of the silicon-based oxide particles was increased at a rate of 2°C/min from a temperature of 720°C to 800°C.

**Example 7**

A negative electrode active material was prepared in the same manner as in Example 5, except that the doping temperature of Li during the preparation of the silicon-based oxide particles was increased at a rate of 5°C/min from a temperature of 600°C to 900°C.

**Example 8**

A negative electrode active material was prepared in the same manner as in Example 5, except that the doping temperature of Li during the preparation of the silicon-based oxide particles was increased at a rate of 2°C/min from a temperature of 780°C to 900°C.

**Comparative Example 1**

A negative electrode active material was prepared in the same manner as in Example 1, except that the doping temperature of Li during the preparation of the silicon-based oxide particles was decreased at a rate of 7 °C/min from a temperature of 1,000°C to 600°C.

**Comparative Example 2**

A negative electrode active material was prepared in the same manner as in Example 5, except that the doping temperature of Li during the preparation of the silicon-based oxide particles was decreased at a rate of 7 °C/min from a temperature of 1,000°C to 600°C.

**Comparative Example 3**

By heat-treating 200 g of a powder obtained by uniformly mixing a Si powder and a silicon oxide ($SiO_2$) powder at a molar ratio of 1:1 and 14 g of Mg at 1400°C and 700°C, respectively, in a reduced pressure atmosphere, silicon oxide vapor by the Si and the silicon oxide and magnesium vapor were simultaneously generated and allowed to react in the gas phase. After a reacted composite was cooled and precipitated, the composite was pulverized with a jet mill to collect particles having an average particle diameter ($D_{50}$) of about 6 um.

The collected particles were put into a tubular furnace in the form of a tube and subjected to chemical vapor deposition (CVD) treatment under a mixed gas of argon (Ar) and methane ($CH_4$) to prepare preliminary silicon-based oxide particles on which a carbon coating layer is formed.

As a result of ICP analysis, the contents of C (Mg), S (Mg), and T (Mg) of the prepared negative electrode active material were 6.1 wt%, 5.9 wt% and 6 wt%, respectively, based on 100 wt% of the silicon-based oxide particles.

**Comparative Example 4**

(1) Preparation of preliminary silicon-based oxide particles **(carbon layer formation)**

A powder in which a Si powder and a $SiO_2$ powder were uniformly mixed at a molar ratio of 1:1 was heat-treated at 1,400°C in a reduced pressure atmosphere to collect a SiO powder. After the reacted powder was cooled and precipitated, the composite was pulverized with a jet mill to collect particles having an average particle diameter ($D_{50}$) of about 6 um.

The collected particles were put into a tubular furnace in the form of a tube and subjected to chemical vapor deposition (CVD) treatment under a mixed gas of argon (Ar) and methane ($CH_4$) to prepare preliminary silicon-based oxide particles on which a carbon coating layer is formed.

(2) Preparation of silicon-based oxide particles **(Li doping)**

Particles including Li were prepared by heat-treating the preliminary silicon-based oxide powder and the Li metal powder at a temperature of 800°C in an inert atmosphere for 2 hours.

(3) Preparation of negative electrode active material **(formation of surface coating layer of silicon-based oxide particles)**

After the prepared silicon-based oxide particles including Li and $Al(PO_3)_3$ were mixed, a heat treatment was performed at a temperature of 600°C to form a surface coating layer composed of $AlPO_4$ and $Li_3PO_4$ on the surface of the silicon-based oxide particles including Li.

As a result of ICP analysis, the contents of Al and P of the prepared negative electrode active material were 0.15 wt% and 0.5 wt%, respectively, based on 100 wt% of the silicon-based oxide particles.

As a result of ICP analysis, the contents of C (Li), S (Li), and T (Li) of the prepared negative electrode active material were 3.1 wt%, 2.9 wt% and 3 wt%, respectively, based on 100 wt% of the silicon-based oxide particles.

[Table 1]

| Battery | C (Mg) (wt%) | S (Mg) (wt%) | T (Mg) (wt%) | C (Li) (wt%) | S (Li) (wt%) | T (Li) (wt%) |
|---------|--------------|--------------|--------------|--------------|--------------|--------------|
| Example 1 | 6.1 | 5.9 | 6 | 0.5 | 2.2 | 2 |

(continued)

| Battery | C (Mg) (wt%) | S (Mg) (wt%) | T (Mg) (wt%) | C (Li) (wt%) | S (Li) (wt%) | T (Li) (wt%) |
|---|---|---|---|---|---|---|
| Example 2 | 6.1 | 5.9 | 6 | 1 | 2.1 | 2 |
| Example 3 | 6.1 | 5.9 | 6 | 0.7 | 3.3 | 3 |
| Example 4 | 6.1 | 5.9 | 6 | 2.5 | 3.1 | 3 |
| Example 5 | 8.1 | 7.9 | 8 | 0.5 | 2.2 | 2 |
| Example 6 | 8.1 | 7.9 | 8 | 1 | 2.1 | 2 |
| Example 7 | 8.1 | 7.9 | 8 | 0.7 | 3.3 | 3 |
| Example 8 | 8.1 | 7.9 | 8 | 2.5 | 3.1 | 3 |
| Comparative Example 1 | 6.1 | 5.9 | 6 | 20 | 0.6 | 3 |
| Comparative Example 2 | 8.1 | 7.9 | 8 | 20 | 0.6 | 3 |
| Comparative Example 3 | 6.1 | 5.9 | 6 | - | - | - |
| Comparative Example 4 | - | - | - | 3.1 | 2.9 | 3 |

### <Manufacture of negative electrode and lithium secondary battery>

### Examples 1A to 8A

A uniform negative electrode slurry was prepared by together mixing the negative electrode active material prepared in Example 1 as a negative electrode active material, carbon black as a conductive material, and carboxymethylcellulose (CMC) and styrene butadiene rubber (SBR) as a binder with a solvent, that is, water ($H_2O$) at a weight ratio of 80 : 10 : 4 : 6. One surface of the copper current collector was coated with the prepared negative electrode slurry, and the copper current collector was dried and rolled, and then punched in a predetermined size to manufacture a negative electrode.

Li metal was used as a counter electrode, and after a polyolefin separator was interposed between the negative electrode and Li metal, an electrolyte in which 1 M $LiPF_6$ was dissolved was injected into a solvent in which ethylene carbonate (EC) and diethyl carbonate (EMC) were mixed at a volume ratio of 30:70, thereby manufacturing a coin-type half battery in Example 1A.

Negative electrodes and coin-type half batteries in Examples 2A to 8A were manufactured in the same manner as in Example 1A, except that as negative electrode active materials, the negative electrode active materials in Examples 2 to 8 were used, respectively.

### Comparative Examples 1A to 4A

Negative electrodes and coin-type half batteries in Comparative Examples 1A to 4A were manufactured in the same manner as in Example 1A, except that as negative electrode active materials, the negative electrode active materials in Comparative Examples 1 to 4 were used, respectively.

### <Evaluation of initial efficiency, cycle characteristics and change rate in electrode thickness of secondary battery>

By charging and discharging the secondary batteries in Examples 1A to 8A and Comparative Examples 1A to 4A, the initial efficiency, cycle characteristics and electrode thickness change rate were evaluated, and are shown in the following Table 2.

The batteries manufactured in Examples 1A to 8A and Comparative Examples 1A to 4A were charged at a constant current (CC) of 0.1 C at 25°C until the voltage became 5 mV and then charged at a constant voltage (CV) to perform the first charging until the charging current became 0.005 C (cut-off current). Thereafter, the batteries were left to stand for 20 minutes, and then discharged at a constant current (CC) of 0.1 C until the voltage became 1.5 V to confirm the initial efficiency.

Thereafter, the cycle characteristics were evaluated by repeating charging and discharging at 0.5 C up to 40 cycles to measure the capacity retention rate. After the cycle characteristic evaluation was completed, the 41st cycle was terminated in the charged state, the thickness was measured by disassembling the battery, and then the change rate in the electrode thickness was calculated.

The initial efficiency (%) was derived from the results during one-time charge/discharge by the following equation.

$$\cdot \text{ Initial efficiency (\%) = \{discharge capacity}$$

$$\text{(mAh/g) of negative electrode active material / charge}$$

$$\text{capacity (mAh/g) of negative electrode active material\}} \times 100$$

The capacity retention rate and the change rate in the electrode thickness were derived by the following calculation, respectively.

$$\cdot \text{ Capacity retention rate (\%) = (40 times discharge}$$

$$\text{capacity / 1 time discharge capacity)} \times 100$$

$$\cdot \text{ Change rate (\%) in electrode thickness =}$$

$$\{\text{(negative electrode thickness after charging 41 times −}$$

$$\text{initial negative electrode thickness) / initial negative}$$

$$\text{electrode thickness\}} \times 100$$

[Table 2]

| Battery | Discharge capacity (mAh/g) | Initial efficiency (%) | Capacity retention rate (%) | Change rate in electrode thickness (%) |
|---|---|---|---|---|
| Example 1A | 1324 | 87.2 | 83.1 | 53.8 |
| Example 2A | 1325 | 87.5 | 82.9 | 54.2 |
| Example 3A | 1264 | 89.8 | 83.7 | 52.8 |
| Example 4A | 1265 | 89.9 | 83.4 | 53.1 |
| Example 5A | 1270 | 89.1 | 85.9 | 50.8 |
| Example 6A | 1271 | 89.2 | 85.4 | 51.2 |
| Example 7A | 1215 | 91.9 | 86.5 | 49.5 |
| Example 8A | 1217 | 92.1 | 86.1 | 50.1 |
| Comparative Example 1A | 1320 | 86.9 | 81.1 | 57.2 |
| Comparative Example 2A | 1465 | 88.9 | 81.5 | 56.1 |
| Comparative Example 3A | 1455 | 80.1 | 79.5 | 59.3 |
| Comparative Example 4A | 1421 | 82.5 | 79.1 | 60.4 |

Referring to Table 2, it can be confirmed that the case of secondary batteries including the negative electrode active materials in Examples 1 to 8 (Examples 1A to 8A) has the overall effect of improving the capacity retention rate and reducing the change rate in electrode thickness compared to in the case of using the negative electrode active materials in Comparative Examples 1 to 4 (Comparative Examples 1A to 4A).

Specifically, the negative electrode active materials of Comparative Examples 1 and 2 are the cases where the content of C (Li) is larger than the content of S (Li) and the content of Li on the particle diameter is so small that it can be confirmed that the change rate in electrode thickness is large and the capacity retention rate is low because the thickness expansion of the electrode cannot be easily controlled during charge/discharge.

Further, the negative electrode active material of Comparative Example 3 does not include Li. There is no increase in initial efficiency due to the inclusion of Li, and Li which controls the thickness expansion during charge/discharge is not included. Therefore, it can be confirmed that the secondary battery of Comparative Example 3A has a lower initial efficiency and a larger change rate in electrode thickness than those of Examples 1A to 4A having the same Mg content.

In addition, the negative electrode active material of Comparative Example 4 does not include Mg. There is no increase in initial efficiency due to the inclusion of Mg. Specifically, the negative electrode active material of Comparative Example 4 is the case where the content of C (Li) is larger than the content of S (Li) and the content of Li on the particle surface is so small that it can be confirmed that the change rate in electrode thickness is large and the capacity retention rate is low because the thickness expansion of the electrode cannot be easily controlled during charge/discharge.

According to the present invention, the negative electrode active material appropriately includes Mg and Li, and the content of S (Li) is higher than the content of C (Li), thereby effectively increasing the initial efficiency of the battery and improving the swelling characteristics and capacity retention rate thereof.

**Claims**

1. A negative electrode active material comprising silicon-based oxide particles, wherein at least a portion of the silicon-based oxide particles comprise Mg and Li, and when a content of Mg and a content of Li within 50% of the radius in the surface direction from the particle center are defined as C (Mg) and C (Li), respectively, and a content of Mg and a content of Li within 50% of the radius in the center direction from the particle surface are defined as S (Mg) and S (Li), respectively, the contents satisfy the following Equation (1) and the following Equation (2):

$$\text{Equation (1)} \quad 0.8 \leq S(Mg) \,/\, C(Mg) \leq 1.2$$

$$\text{Equation (2)} \quad 1 < S(Li) \,/\, C(Li)$$

2. The negative electrode active material of claim 1, wherein a Mg content T (Mg) throughout each particle of at least a portion of the silicon-based oxide particles is 0.01 wt% to 15 wt% based on total 100 wt% of the entire particles.

3. The negative electrode active material of claim 1, wherein a Li content T (Li) throughout each particle of at least a portion of the silicon-based oxide particles is 0.01 wt% to 15 wt% based on total 100 wt% of the entire particles.

4. The negative electrode active material of claim 1, wherein a Li content S (Li) on the surface of each particle of at least a portion of the silicon-based oxide particles is 0.1 wt% to 20 wt% based on total 100 wt% until 50% of the radius in the center direction from the particle surface.

5. The negative electrode active material of claim 1, wherein the silicon-based oxide particles further comprise at least one of a carbon layer provided on at least a portion of the surface; and a phosphate layer including at least one of aluminum phosphate and lithium phosphate.

6. The negative electrode active material of claim 1, wherein the Mg is present as a Mg compound phase comprising at least one of Mg silicates, Mg silicides and Mg oxides.

7. The negative electrode active material of claim 1, wherein the Li is present as a Li compound phase comprising at least one of Li silicates, Li silicides and Li oxides.

8. The negative electrode active material of claim 1, wherein the Li is present as a Li compound phase comprising $Li_2SiO_3$ and $Li_2Si_2O_5$.

9. The negative electrode active material of claim 8, wherein a sum of the contents of $Li_2SiO_3$ and $Li_2Si_2O_5$ is greater than a total sum of the rest of the Li compound phase.

10. The negative electrode active material of claim 1, wherein the silicon-based oxide particles have an average particle diameter of ($D_{50}$) of 1 um to 30 um.

11. The negative electrode active material of claim 1, wherein the silicon-based oxide particles have a BET specific surface area of 0.5 $m^2$/g to 60 $m^2$/g.

12. The negative electrode active material of claim 1, wherein the silicon-based oxide particles comprises Si crystal grains having a particle diameter of 1 nm to 20 nm.

13. A negative electrode slurry comprising the negative electrode active material according to any one of claims 1 to 12.

14. A negative electrode comprising the negative electrode active material according to any one of claims 1 to 12.

15. A secondary battery comprising the negative electrode of claim 14.

## INTERNATIONAL SEARCH REPORT

| International application No. |
|---|
| **PCT/KR2022/011917** |

**A. CLASSIFICATION OF SUBJECT MATTER**

**H01M 4/48**(2010.01)i; **H01M 4/58**(2010.01)i; **H01M 4/36**(2006.01)i; **H01M 4/62**(2006.01)i; **H01M 4/587**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/48(2010.01); H01M 10/052(2010.01); H01M 10/0525(2010.01); H01M 4/485(2010.01); H01M 4/58(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 활물질(negative electrode active material), 실리콘계 산화물 입자(silicon-based oxide particles), 리튬(lithium), 마그네슘(magnesium)

**C. DOCUMENTS CONSIDERED TO BE RELEVANT**

| Category* | Citation of document, with indication, where appropriate, of the relevant passages | Relevant to claim No. |
|---|---|---|
| A | KR 10-2019-0092311 A (LG CHEM, LTD.) 07 August 2019 (2019-08-07) See claims 1, 20 and 21. | 1-15 |
| A | KR 10-2264739 B1 (LG ENERGY SOLUTION, LTD.) 15 June 2021 (2021-06-15) See claims 1-8, 10-14 and 16-18. | 1-15 |
| A | KR 10-2021-0093830 A (LG ENERGY SOLUTION, LTD.) 28 July 2021 (2021-07-28) See entire document. | 1-15 |
| A | US 2016-0372753 A1 (KABUSHIKI KAISHA TOSHIBA) 22 December 2016 (2016-12-22) See entire document. | 1-15 |
| A | KR 10-2020-0055519 A (LG CHEM, LTD.) 21 May 2020 (2020-05-21) See entire document. | 1-15 |

☐ Further documents are listed in the continuation of Box C.    ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **24 November 2022** | **28 November 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/011917**

| Patent document cited in search report | | | Publication date (day/month/year) | Patent family member(s) | | | Publication date (day/month/year) |
|---|---|---|---|---|---|---|---|
| KR | 10-2019-0092311 | A | 07 August 2019 | CN | 111466045 | A | 28 July 2020 |
| | | | | CN | 111466045 | B | 08 July 2022 |
| | | | | EP | 3709405 | A1 | 16 September 2020 |
| | | | | EP | 3709405 | A4 | 20 January 2021 |
| | | | | KR | 10-2290961 | B1 | 20 August 2021 |
| | | | | US | 2020-0388833 | A1 | 10 December 2020 |
| | | | | WO | 2019-151774 | A1 | 08 August 2019 |
| KR | 10-2264739 | B1 | 15 June 2021 | CN | 111466044 | A | 28 July 2020 |
| | | | | CN | 111466044 | B | 14 June 2022 |
| | | | | EP | 3709406 | A1 | 16 September 2020 |
| | | | | EP | 3709406 | A4 | 30 December 2020 |
| | | | | KR | 10-2019-0104895 | A | 11 September 2019 |
| | | | | US | 2020-0350571 | A1 | 05 November 2020 |
| | | | | WO | 2019-168352 | A1 | 06 September 2019 |
| KR | 10-2021-0093830 | A | 28 July 2021 | CN | 112514116 | A | 16 March 2021 |
| | | | | EP | 3819967 | A1 | 12 May 2021 |
| | | | | EP | 3819967 | A4 | 01 December 2021 |
| | | | | EP | 4068431 | A2 | 05 October 2022 |
| | | | | EP | 4068431 | A3 | 19 October 2022 |
| | | | | KR | 10-2020-0023240 | A | 04 March 2020 |
| | | | | KR | 10-2316341 | B1 | 22 October 2021 |
| | | | | KR | 10-2316342 | B1 | 22 October 2021 |
| | | | | US | 2021-0167362 | A1 | 03 June 2021 |
| | | | | WO | 2020-040586 | A1 | 27 February 2020 |
| US | 2016-0372753 | A1 | 22 December 2016 | JP | 6430489 | B2 | 28 November 2018 |
| | | | | US | 10511026 | B2 | 17 December 2019 |
| | | | | WO | 2015-145521 | A1 | 01 October 2015 |
| KR | 10-2020-0055519 | A | 21 May 2020 | CN | 113632262 | A | 09 November 2021 |
| | | | | EP | 3859835 | A1 | 04 August 2021 |
| | | | | EP | 3859835 | A4 | 10 November 2021 |
| | | | | US | 2022-0006077 | A1 | 06 January 2022 |
| | | | | WO | 2020-101301 | A1 | 22 May 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210107172